# EUROPEAN PATENT APPLICATION

(11) **EP 1 508 541 A1**
(43) Date of publication of application: **23.02.2005**
(21) Application number: 03388054.3
(22) Date of filing: 21.08.2003
(51) Int. Cl.: B65G 47/96

(54) **An apparatus for conveying and selectively discharging products**

(71) Applicant: CABINPLANT INTERNATIONAL A/S, DK-5683 Haarby (DK)
(72) Inventor: Kofoed, Jesper Rose, 5642 Millinge (DK)
(74) Representative: Nielsen, Henrik Sten

(57) **Abstract**

An apparatus (10) for conveying and selectively discharging products at a plurality of specific unloading areas comprises a frame (22), defining a first end and a second end opposite the first end, a weight or size determination unit (14) mounted at the first end, at least two sprocket wheels (20,21) mounted in the frame at the first and the second end, respectively, a motor (26) connected to at least one of the sprocket wheels for causing the at least one sprocket wheel to rotate, and a first plurality of conveyor belt elements (28) each defining a third end and a fourth end opposite the third end, a first aperture parallel with the third end and adapted for engaging an articulation shaft (30,38). The conveyor belt element comprises a magnetic, ferromagnetic or magnetizable area at the fourth end and is operable between a substantially horizontal position and a substantially vertical position. The apparatus further comprises means for generating a first magnetic field for maintaining the conveyor belt elements in the substantially horizontal position, means for locally counteracting the first magnetic field and/or nullifying the first magnetic field, and a central processing unit or CPU comprising a list defining the grades controlling the apparatus.

## Description

The present invention relates to a technique for weighing and sorting articles, each article having a weight within a given weight interval.

Within industries such as foodstuffs industry, weighing and sorting machines have been described in publications such as US 6,234,297, US 6,015,049, WO 98/49892, US 6,321,914 and US 5,526,437, all of which are hereby included by reference in the present specification.

In the foodstuffs industry there is a need for sorting products or articles at high speeds or throughputs according to various physical characteristics such as size, colour or weight, alternatively by any combination of these. The present invention seeks to provide an apparatus and a method for such tasks.

An object of the present invention is to provide an apparatus or machine for sorting products is that products must not be damaged during operation.

A particular feature of an apparatus or machine for sorting products is that the products or articles to be sorted may be transferred to a secondary handling, processing or transporting system.

The above need and the above object and the above feature together with numerous other objects and features will be evident from the below detailed description of a first and presently preferred embodiment of an apparatus according to a first aspect of the present invention for conveying and selectively discharging products at a plurality of specific unloading areas, each of the unloading areas corresponding to a specific grade or grade interval. The apparatus comprises:
a frame, defining a first end and a second end opposite the first end,
a weight or size determination unit mounted at the first end,
at least two sprocket wheels mounted in the frame at the first and the second end, respectively,
a motor connected to at least one of the sprocket wheels for causing the at least one sprocket wheel to rotate,
a first plurality of conveyor belt elements each defining a third end and a fourth end opposite the third end, a first aperture extending substantially parallel with the third end, the first aperture being adapted for engaging an articulation shaft, the conveyor belt element comprising a magnetic, ferromagnetic or magnetizable area at the fourth end, the magnetic, ferromagnetic or magnetizable area being attractable to a magnetic force, each of the conveyor belt elements being operable between a substantially horizontal position and a substantially vertical position,
means for generating a first magnetic field for maintaining the conveyor belt elements in the substantially horizontal position,
means for locally counteracting the first magnetic field and/or nullifying the first magnetic field for operating a specific conveyor belt element in the substantially horizontal position to the substantially vertical position, and
a central processing unit or CPU comprising a list defining the grades and/or the grade intervals, the CPU controlling the operation of said apparatus.

In the present context the term motor is to be considered defining a power or motion generating device or unit covering all embodiments of motors and engines such as motors or engines chosen from the group including pneumatic driven engines, hydraulically driven engines and electromotors or any combination thereof, but not limited to these.

The motor may be connected directly to the sprocket wheel. Alternatively the motor may be connected to the sprocket wheel via a gear or transmission means.

The central processing unit or CPU may be connected to any number of the elements of the apparatus for the operation and supervision of these. Due to response time limitations it is contemplated to be advantageous to place the CPU in close proximity of the apparatus, e.g. by employing a dedicated CPU device in a circuit board or by employing an external computer having direct wire connection to the apparatus or to specific parts of the apparatus.

However functions that have long response times may be allocated to another CPU device placed at a remote location, such as in factory control rooms, where the connection to the apparatus is constituted by a computer communication network. The computer communication network may be constituted by local area network, global area network, wide area network, wireless connection, direct connection or any combination thereof.

The CPU may be connected in any way to a sensor device or system sensing or detecting the position of at least one conveyor belt element for the safe and/or correct operation of the individual conveyor belt elements. The CPU may receive information regarding the position the conveyor belt elements, e.g. relative to a given position such as relative to the sprocket wheel or a specific unloading station or area.

It is contemplated that the CPU may communicate with an externally placed supervising system for supervising the general system operation, such as for alerting an operator when a given amount of products within a given grade or grade interval have been processed.

According to a first feature of the present invention the means for generating the first magnetic field may be constituted by an array of a second plurality of electromagnets mounted in the frame.

According to a second feature of the present invention the means for generating the first magnetic field may be constituted by an array of a third plurality of electromagnets mounted in the frame and a fourth plurality of permanent magnets, at least one of the fourth plurality being mounted in the frame in-between each of the electromagnets of the third plurality.

According to a third feature of the present invention the counteracting may be constituted by turning off and/or on electrical power to at least one specific electromagnet. A specific electromagnet may operate more than one specific conveyor belt element by creating an area where the conveyor belt elements, as they pass by, one by one are operated from the substantially horizontal position to the substantially vertical position.

According to a fourth feature of the present invention the computing device controls the locally counteracting means. The computing device is connected to the motor and may further be connected to the vision system and is thereby able to calculate or determine when the articles or products are at the correct unloading or dispensing area, therefore it is contemplated to be advantageous to assemble all these functions in one device, possibly employing more than one microprocessor.

According to a fifth feature of the present invention the conveying and sorting machine may be enhanced, fitted with or added an externally placed computer controlling the locally counteracting means. An externally placed computer or computing unit may be employed to control the discharge, dropping or unloading of articles. This externally placed computer may receive information regarding the speed of the conveyor belt, the placement of the products or articles on the conveyor belt, and the grade or grade interval that the articles or products are allocated to.

According to a sixth feature of the present invention the conveying and sorting machine may have the weight or size determination unit constituted by a vision based system comprising a fourth plurality of cameras connected to a microprocessor based image analysing unit including information regarding density of the articles for the calculation of the weight of each of the articles. The cameras may be placed facing the conveyor belt at any angle, preferably placed substantially facing the top surface of the conveyor belt. Alternatively the weight or size determination unit is constituted by a weighing machine comprising weighing transducers.

According to a seventh feature of the present invention the conveying and sorting machine may have the weight or size determination unit constituted or supplemented with transducers for sorting by colour, shape, form or density. This operation may be well suited while sorting more than one type of products thereby enabling the apparatus to distinguish between the different types of products.

Alternatively the unit may be utilised to distinguish between different characteristics of one type of product.

According to a second aspect of the present invention a method of conveying and selectively discharging products at a plurality of specific unloading areas, each of the unloading areas corresponding to a specific grade or grade interval. The method comprises:
providing a frame, defining a first end and a second end opposite the first end,
providing a weight or size determination unit mounted on the frame at the first end,
providing at least two sprocket wheels mounted in the frame at the first and the second end, respectively,
providing a motor connected to at least one of the sprocket wheels for causing the at least one sprocket wheel to rotate,
providing a first plurality of conveyor belt elements each defining a third end and a fourth end opposite the third end, a first aperture extending substantially parallel with the third end, the first aperture being adapted for engaging an articulation shaft, the conveyor belt element comprising a magnetic, ferromagnetic or magnetizable area at the fourth end, the magnetic, ferromagnetic or magnetizable area being attractable to a magnetic force, each of the conveyor belt elements being operable between a substantially horizontal position and a substantially vertical position,
providing means for generating a first magnetic field for maintaining the conveyor belt elements in the substantially horizontal position,
providing means for locally counteracting the first magnetic field and/or nullifying the first magnetic field for operating a specific conveyor belt element in the substantially horizontal position to the substantially vertical position, and
performing the conveying and selective discharge of the products by providing the products to the weight or size determination unit, the weight or size determination unit determining size or weight of the products, conveying the products on the conveyor belt elements, operating at least one conveyor belt element to the substantially vertical position when the product is at a corresponding specific unloading area.

According to a eighth feature of the present invention a central processing unit or CPU comprising a list defining the grades and/or the grade intervals may be provided, the CPU may then control the operation of an apparatus performing the method.

According to the teachings of the present invention the method according to the second aspect of the present invention described above may further include any of the features of the conveying and sorting apparatus previously described. Consequently the CPU may also control the features previously described.

The present invention will now be further described with reference to the drawings in which
Fig. 1 is a schematic cross-sectional side view of a conveying and sorting machine
Fig. 2 is a cross-sectional view of the conveying and sorting machine of Fig. 1,
Fig. 3 is a zoomed cross-sectional view of the conveying section comprising conveyor belt elements and electromagnets,
Fig. 4 is a top view of the conveying section of the conveying and sorting machine,
Fig. 5 is a cross-sectional view of a vision-based weight determination unit, and
Fig. 6 is a schematic top view of a set-up of four conveying and sorting machines.

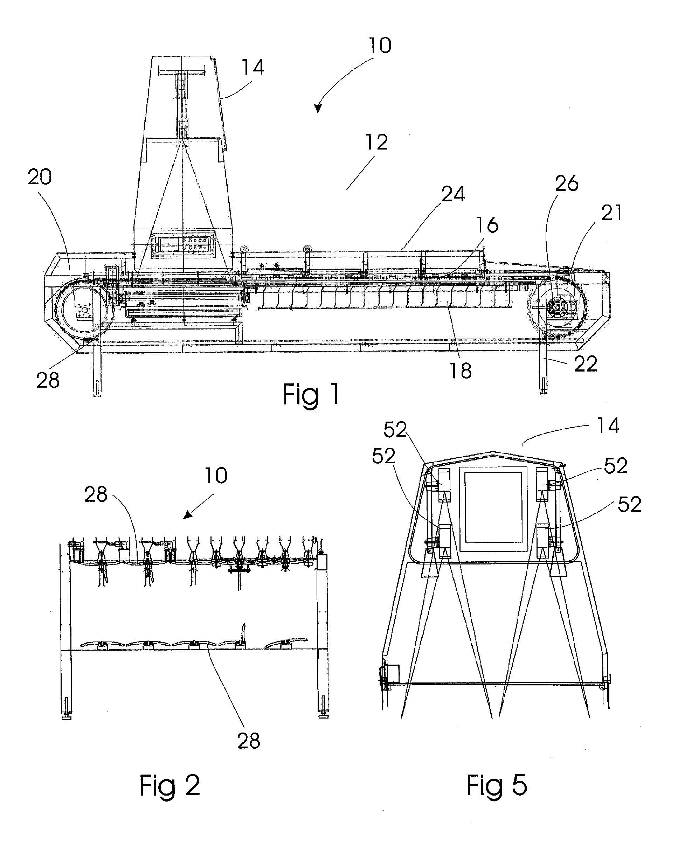

Fig. 1 is a schematic cross-sectional side view of a conveying and sorting machine according to the present invention in a first and presently preferred embodiment. The conveying and sorting machine is designated the reference numeral 10 comprising a conveyor section 12 and a weight or size determination unit 14. The conveyor section 12 comprises a conveyor belt 16 conveying the articles to be sorted by weight, size or any other characteristics, the articles or products being divided into grades or in grade intervals based on weight, size or any other characteristics.

The conveyor belt 16 comprises a number of conveyor belt elements 28 adapted for dropping, dispensing or delivering the products or articles into a number of compartments, receptacles or chutes 18 for collecting or receiving a grade or grade interval that the individual articles or products have been allocated to. The articles or products delivered into the compartments, receptacles or chutes 18 may simply be transferred into a number of containers for subsequent transport or transferred onto a secondary product handling or processing system.

The conveyor belt elements 28 are held in a substantially horizontal position by means of at least one magnetic field. The magnetic field or fields may be generated by permanent magnets or electromagnets mounted in the frame or each of the conveyor belt elements 28 may generate a magnetic field, alternatively any combination thereof.

The conveyor belt 16 engages two sprockets 20, 21. The conveyor belt 16 is endlessly looping around the sprocket wheels 20,21. The sprockets 20 and 21 are driven by a motor 26, such as an electromotor, capable of turning the sprockets in either direction, and preferably with an option of varying the revolution speed of the sprockets, and consequently the speed of the conveyor belt 16. The speed of the conveyor belt may be varied with respect to the products, e.g. a higher speed may be suitable when sorting or grading large fish, such as salmon, whilst a lower speed may be more appropriate when sorting more fragile products such as tiger prawns. The speed of the conveyor belt 16 may be controlled from the processor system in the weight or size determination unit, from an external computer, alternatively from an external computer connected to the weight or size determination unit, where the connection may be constituted by a direct connection, such as by direct wiring, by a local area network, by a wireless connection or any combination thereof.

At the sprocket wheel placed at the downstream end of the conveyor belt 16 the conveyor belt elements 28 are brought to a horizontal position or configuration by means of a guideway, guidebar, ramp, rail, slope or the like, before engaging the sprocket wheel. Alternatively the conveyor belt elements 28 are brought to the horizontal position by a magnetic field or by the sprocket.

The conveyor section 12 is built around or in a frame comprising a number of supports 22. The frame is preferably made from a metallic material and may include openings or doors for easy cleaning.

Fig. 2 is a cross-sectional view of the conveying and sorting machine 10 of Fig. 1 illustrating the conveyor belt elements 28, here illustrated in a horizontal configuration. The weight, size or other characteristics of the individual articles or products are determined by the weight detection section 14, the detection may be performed prior to the products being placed on the conveyor belt 16 or preferably after the products being placed into the conveyor belt 16.

In the preferred embodiment of the present invention, the weight or size determination or detection section 14 is constituted by a vision-based system. The system visually inspects the articles or products on the conveyor section 12 and by knowing, or previously having determined, the density of the products or articles, the vision-based system is able to determine, or at least estimate, the weight of the articles or products, alternatively the weight or size determination unit registers the length or the overall size of the products based on the image captured by the system. Alternatively the vision-based system inspects the articles from the side as opposed to the solution illustrated in Fig. 1. The weight determination of the articles or products may be performed by a more traditional weighing machine including weighing transducers.

Still referring to Fig. 2, the return path of the conveyor belt at the lower part of the conveyor section 12 is illustrated.

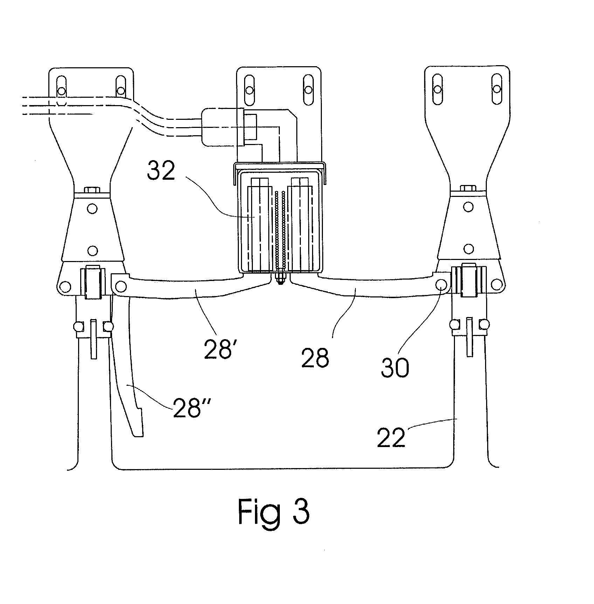

Fig. 3 is a close-up cross-sectional view of a section of conveyor belt elements 28. The products or articles are placed on the top surface of the conveyor belt elements 28 at the load-bearing section. Each of the conveyor belt elements 28 are fixated in one end by use of an articulation shaft or pivot rod 30 enabling the conveyor belt element 28 to operate from a substantially horizontal configuration to a substantially vertical configuration thereby expelling, dispensing or dropping the articles or products into a specific compartment or receptacle 18. Each of the conveyor belt elements 28 are able to operate independent of any of the neighbouring conveyor belt elements 28.

The conveyor belt elements 28 are operable between a containment state and a delivery state. When the conveyor belt element 28 is in the containment state the conveyor belt element 28 is in a substantially horizontal position ensuring that the articles are not dropped into a station collecting articles of a grade not corresponding to the grade that the article on the conveyor belt element 28 has been allocated to. When the conveyor belt element 28 is in the delivery state, the conveyor belt element 28 is in a substantially vertical position, and the product slides off the conveyor belt element 28 and into a compartment, receptacle or chute. The conveyor belt elements 28 and 28' are in the containment state while the conveyor belt element 28" is in the delivery state.

The speed of the conveyor belt 16 and the overall geometrical size of the opening of the compartment, receptacle or chute as well as the distance from the top of the compartment, receptacle or chute to the conveyor belt 16 determines the position or area wherein the conveyor belt element must release the product in order for the product or article to enter the desired compartment, receptacle or chute.

According to the present invention the conveyor belt elements 28 are kept in the substantially horizontal position by a magnetic field generated by a magnetic area in the conveyor belt element 28 itself. The magnetic area of the conveyor belt element 28 may encompass the entire conveyor belt element 28. A second magnetic field may be generated by a plurality of permanent magnets, which may be fastened to the frame 22. Alternatively the magnetic field may be generated by a plurality of electromagnets mounted in the frame, further alternatively by any combination thereof.

The second magnetic field may be employed to maintain the conveyor belt element 28 in the substantially horizontal position and/or to operate the conveyor belt element 28 from the substantially horizontal position to the substantially vertical position.

The conveyor belt elements 28 are mechanically formed so that the distal end of the conveyor belt element, e.g. the end of the conveyor belt element 28 facing away from the articulation shaft or pivot rod 30, does not engage the block 32 when the individual conveyor belt element 28 is in the substantially horizontal position. The block 32 may include or be constituted by an electromagnet or a permanent magnet. Alternatively the block 32 is constituted by or includes a permanent magnet with a coil to suppress or nullify the magnetic field emitted by the permanent magnet.

At least one conveyor belt element 28 carries or conveys the product or articles, when the product is approaching a compartment or receptacle 18 collecting or receiving articles within a specific grade, the electromagnets disengage and the conveyor belt element 28 is dragged down by gravity and the product or article drops into the compartment or receptacle 18. The conveyor belt elements 28 are released from the attraction to the magnets mounted above the distal end of the conveyor belt elements 28, in the case where electromagnets are employed, by turning off the electrical power driving the electromagnet. In the case where permanent magnets are employed at least one neighbouring electromagnet may be used to suppress the magnetic field emitted by the permanent magnet. Alternatively a coil of metallic conductor may be applied to the permanent magnet, and by applying a current a magnetic field having a polarity opposite the magnetic field of the permanent magnet may suppress, or even nullify, the magnetic field of the permanent magnet so that the conveyor belt element 28 may pivot and thereby release the product or article.

In an alternative embodiment of the present invention a plurality of permanent magnets or electromagnets may be employed for keeping the conveyor belt elements 28 in the substantially horizontal position, the magnets being placed in a position below the distal end of the conveyor belt elements 28 and generating a magnetic field pushing the tip or distal end of the conveyor belt element 28 up when in-between the individual compartments or receptacles 18, alternatively before or after the section comprising the compartments or receptacles 18, or any combination thereof. This placement of magnets may be combined with the configuration or placement mentioned above.

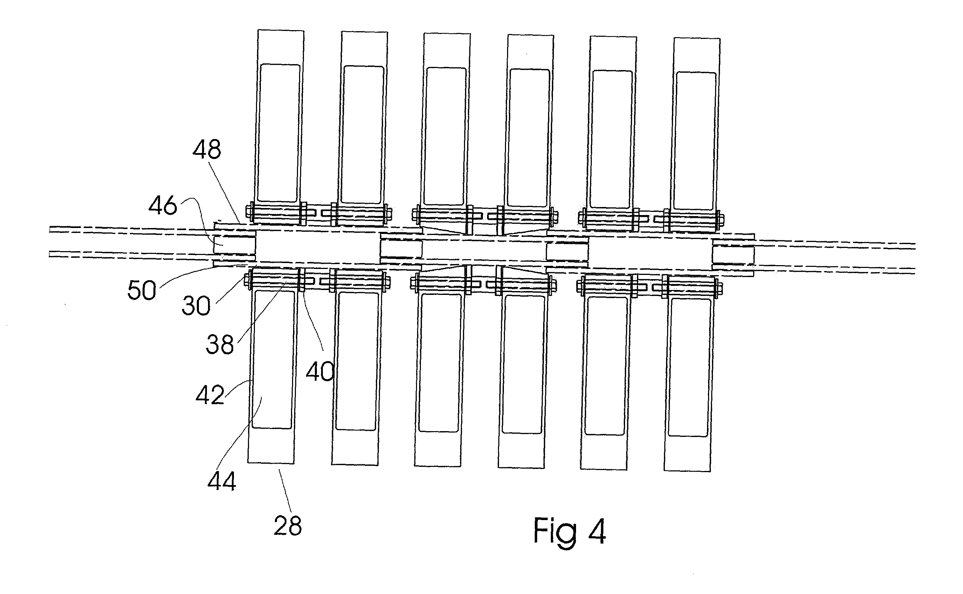

Fig. 4 is a top view of a section of conveyor belt elements 28. Each of the conveyor belt elements 28 comprises a load-bearing section and a section for fixating the conveyor element 28 to two neighbouring conveyor belt elements 28. The back plane 50 includes fixtures 40 for fixating the conveyor element 28 using the pivot rod 38 enabling the conveyor belt element to pivot downwards when dropping the article.

The load-bearing members 42 are in the preferred embodiment of the present invention formed with an aperture 44. The size of the aperture may be varied dependant on the characteristics of the articles to be conveyed and sorted, e.g. a large aperture 44 may not be suitable for conveying and sorting articles such as ammodytes whereas larger apertures may be well suited whilst sorting articles such as gradus callarias or salmo salar. In an alternative embodiment the load-bearing members 42 may be formed with a number of smaller apertures in order to reduce the weight of the conveyor belt element 28. Another way of reducing the weight of the conveyor belt element is to attenuate part of the conveyor belt element 28.

The load-bearing members 42 of the conveyor belt element 28 are in the preferred embodiment of the present invention placed mutually spaced apart, and the same considerations mentioned above in respect to the apertures 44 also apply to the considerations of size of the spacing between the load-bearing members 42 as well as to the size of the load-bearing members 42 themselves. The back plane 50 of the conveyor belt element 28 may vary in size in order to achieve an overall geometrical configuration of the conveyor belt 16 that is substantially straight at the end of the conveyor belt element 28 opposite the back plane 50.

In the preferred embodiment of the present invention the conveyor belt comprises two load-bearing sections constituted by two rows of conveyor belt elements 28 placed with back planes 50 facing each other. The back planes are spaced apart by a block or ring 46 having a bolt or pin 48 allowing the conveyor belt to engage the sprocket 20. Alternatively the sprocket may engage the apertures 44 of the conveyor belt elements.

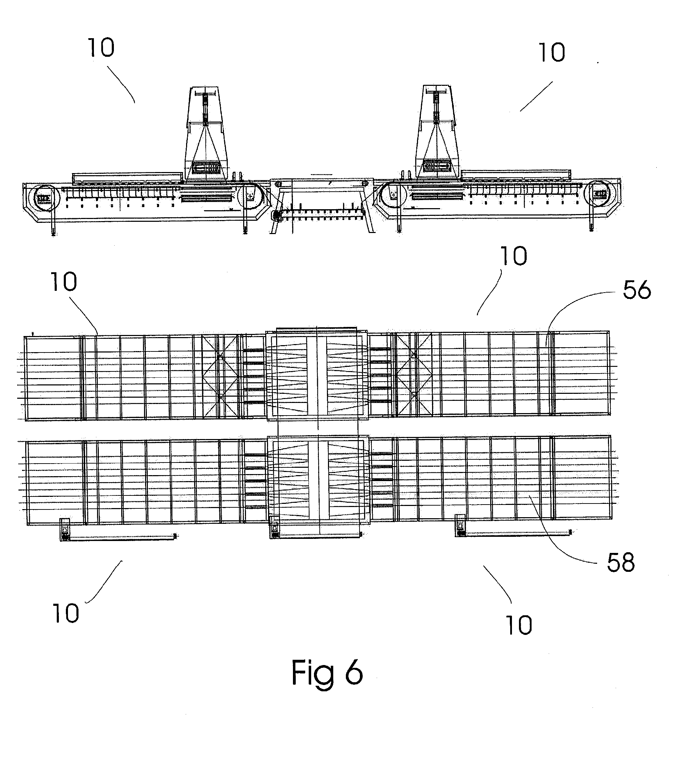

Fig. 5 is a schematic cross-sectional view of the weight detection section 14 of the conveying and sorting machine 10. The weight detection section comprises a number of photo detectors such as cameras 52, in the preferred embodiment of the invention the detection section comprising four cameras. The cameras are mounted in the weight detection 14 facing the conveyor belt 16. In the preferred embodiment, the cameras are facing the conveyor belt 16 from above, alternatively the cameras may be mounted on the side of the weight detection section 14 facing the articles on the conveyor belt 16 from the side. However, it is contemplated that placing the cameras 52 facing the conveyor belt 16 from above gives the advantage of being able to determine the weight of articles in more than one conveyor belt in one operation. The cameras 52 are electrically connected to a microprocessor based processing board 54, the microprocessor board 54 being PLC, FPGA or ASIC based, alternatively any other microprocessor implementation. The microprocessor includes image processing software and information regarding the density of the articles to be conveyed for the determination of the weight of the individual articles. Also included is information regarding the weight intervals of the batches to be collected in the individual compartments or receptacles 18. In the preferred embodiment of the present invention, the cameras are based on visual light detecting cameras but may alternatively be replaced by infrared cameras, laser detection or any other optical detection means and any combination hereof. Further alternatively, the weight detection section 14 may be replaced by a mechanical weighing section detecting the weight of the articles by means of weighing transducers or the like.

Fig. 6 is a schematic top view of a conveying and sorting system comprising four conveying and sorting machines 10 according to the present invention. The conveying and sorting system further comprises two article distribution sections 56, 58, distributing the articles from an infeed system, not illustrated, on to the conveyor belts of the conveying and sorting machines. The distribution section 56, 58 may further comprise means for rejecting articles above or below a given threshold or threshold interval.

The system may further include a reject function, rejecting articles or products that do not have characteristics falling within any grade or grade interval. The rejection of articles may occur prior to the articles being placed on the conveyor belt, e.g. by a secondary weight or size determination unit placed at the infeed end of the conveyor belt section. The reject function may be established by utilising at least one of the unloading areas as a reject station, alternatively the reject function may be constituted by collecting the articles or products at the end of the conveyor belt section.

The vision-based system may also be used for determining if the products or articles are placed in an inappropriate direction on the conveyor belt, e.g. if a fish has been placed substantially perpendicular with respect to the conveying direction.

## Claims

1. An apparatus for conveying and selectively discharging products at a plurality of specific unloading areas, each of said unloading areas corresponding to a specific grade or grade interval, said apparatus comprising:
a frame, defining a first end and a second end opposite said first end,
a weight or size determination unit mounted at said first end,
at least two sprocket wheels mounted in said frame at said first and said second end, respectively,
a motor connected to at least one of said sprocket wheels for causing said at least one sprocket wheel to rotate,
a first plurality of conveyor belt elements each defining a third end and a fourth end opposite said third end, a first aperture extending substantially parallel with said third end, said first aperture being adapted for engaging an articulation shaft, said conveyor belt element comprising a magnetic, ferromagnetic or magnetizable area at said fourth end, said magnetic, ferromagnetic or magnetizable area being attractable to a magnetic force, each of said conveyor belt elements being operable between a substantially horizontal position and a substantially vertical position,
means for generating a first magnetic field for maintaining said conveyor belt elements in said substantially horizontal position,
means for locally counteracting said first magnetic field and/or nullifying said first magnetic field for operating a specific conveyor belt element in said substantially horizontal position to said substantially vertical position, and
a central processing unit or CPU comprising a list defining said grades and/or said grade intervals, said controlling said apparatus.

2. The conveying and sorting apparatus according to claim 1 wherein said means for generating said first magnetic field is constituted by an array of a second plurality of electromagnets mounted in said frame.

3. The conveying and sorting apparatus according to claim 1, wherein said means for generating said first magnetic field is constituted by an array of a third plurality of electromagnets mounted in said frame and a fourth plurality of permanent magnets at least one being mounted in said frame in-between each of said electromagnets of said third plurality.

4. The conveying and sorting apparatus according to any of the preceding claims wherein said counteracting is constituted by turning off and/or on electrical power to at least one specific electromagnet.

5. The conveying and sorting apparatus according to any of the preceding claims, wherein said CPU controls said locally counteracting means.

6. The conveying and sorting apparatus according to any of the claims 1 to 5, wherein an externally placed CPU controls said locally counteracting means.

7. The conveying and sorting machine according to any of the preceding claims, wherein said weight or size determination unit is constituted by a vision based system comprising a fourth plurality of cameras connected to a microprocessor based image analysing unit including information regarding density of said articles for the calculation of the weight of each of said articles.

8. The conveying and sorting machine according to any of the claims 1 to 6 wherein said weight or size determination unit is constituted by a weighing machine comprising weighing transducers.

9. The conveying and sorting machine according to any of the claims 1 to 8 wherein said weight or size determination unit is constituted and/or supplemented with transducers for sorting by colour, shape, form or density,

10. A method of conveying and selectively discharging products at a plurality of specific unloading areas, each of said unloading areas corresponding to a specific grade or grade interval, said method comprising:
providing a frame, defining a first end and a second end opposite said first end,
providing a weight or size determination unit mounted on said frame at said first end,
providing at least two sprocket wheels mounted in said frame at said first and said second end, respectively,
providing a motor connected to at least one of said sprocket wheels for causing said at least one sprocket wheel to rotate,
providing a first plurality of conveyor belt elements each defining a third end and a fourth end opposite said third end, a first aperture extending substantially parallel with said third end, said first aperture being adapted for engaging an articulation shaft, said conveyor belt element comprising a magnetic, ferromagnetic or magnetizable area at said fourth end, said magnetic, ferromagnetic or magnetizable area being attractable to a magnetic force, each of said conveyor belt elements being operable between a substantially horizontal position and a substantially vertical position,
providing means for generating a first magnetic field for maintaining said conveyor belt elements in said substantially horizontal position,
providing means for locally counteracting said first magnetic field and/or nullifying said first magnetic field for operating a specific conveyor belt element in said substantially horizontal position to said substantially vertical position, and
performing said conveying and selective discharge of said products by providing said products to said weight or size determination unit, said weight or size determination unit determining size or weight of said products, conveying said products on said conveyor belt elements, operating at least one of said conveyor belt element to said substantially vertical position when said product is at a specific unloading area corresponding to said grade or grade interval.

11. The method according to claim 10 said method further comprising the step of providing a central processing unit or CPU comprising a list defining said grades and/or said grade intervals, said CPU controlling all the features of claim 10.

12. The method according to any of the claims 10 or 11 said method further comprising any of the features of the claims 2 to 9.
